# EUROPEAN PATENT SPECIFICATION

(11) **EP 3 059 200 B1**
(45) Date of publication and mention of the grant of the patent: **08.05.2019**
(21) Application number: 16156287.1
(22) Date of filing: 18.02.2016
(51) Int. Cl.: B66C 15/04, B66C 13/16, G01C 9/00, B66C 13/08, B66C 13/22

(54) **CONTROL METHOD FOR CRANE SYSTEM INCLUDING A SPREADER BEAM**
STEUERUNGSVERFAHREN FÜR KRANSYSTEM MIT EINER TRAVERSE
PROCÉDÉ DE COMMANDE POUR SYSTÈME DE GRUE COMPRENANT UN PALONNIER

(30) Priority: 19.02.2015 GB 201502801
(43) Date of publication of application: 24.08.2016
(73) Proprietor: Nissan Motor Manufacturing (UK) Ltd., Cranfield Bedfordshire MK43 0DB (GB)
(72) Inventor: MCLAUGHLIN, Steve, Sunderland, Tyne and Wear SR53NS (GB)

(56) References cited:
- WO-A2-2005/094296
- JP-A- H0 643 061
- JP-A- 2014 174 019
- JP-A- 2014 174 020

## Description

### Field of the Invention

The invention relates to a control method for a crane system including a spreader beam. In particular, but not exclusively, the invention relates to the control of crane systems including spreader beams having two or more load points for lifting loads.

### Background to the Invention

Manufacturing environments often include cranes for lifting and placing heavy loads. Various problems can arise during crane operation, such as overloading of the crane, or snagging of a load or a crane hoist on surrounding apparatus during lifting or manoeuvring.

Some crane systems incorporate spreader beams that distribute attachment loading across two or more attachment points on the load, thereby reducing the loading at each attachment point compared with a single hoist. A respective hoist is provided for each attachment point, which raises the potential for problems to arise, and also introduces the potential for more complex issues. For example, if a hoist snags, the crane may continue to draw the remaining free hoists upwards. This can unbalance the load and lead to tilting and swaying, with unpredictable results. A similar situation arises if one or more of the hoists is not attached to the load correctly.

JP2014174020 discloses a method of operating a crane system, monitoring and controlling the crane system depending on loadings. However, this method only considers how to calculate load parameters and cannot manage fault conditions.

The consequences of continuing to operate a crane after a fault develops can be severe, including damage to the crane, the load and surrounding machinery, and also injury to personnel. It is therefore undesirable to rely on an operator to notice such problems arising and to intervene. Furthermore, cranes may be operated remotely via a user interface, or they may be fully automated as in a production line environment, leaving no opportunity for an operator to notice problems.

For this reason, crane load monitoring systems are sometimes implemented in an effort to detect problems as they arise. For example, US 5,152,183 describes a hoist arrangement including force transducers configured to detect excessive loading which may indicate that the hoist has snagged, or that an inappropriate load has been attached. As this arrangement relates to a single hoist, fault diagnosis is relatively straightforward: if the force transducer detects a higher than expected load, this must indicate that either the hoist or load has snagged, or the load that has been attached is too heavy.

As noted above, the faults that can arise in a crane system including a spreader beam are considerably more complex. The corrective action to be taken is dependent on the nature of the fault, and so it is important to accurately determine the precise cause of the problem.

One particular type of crane that is commonly found in a manufacturing environment is a gantry crane, in which a hoist is suspended from a crab that is mounted to a pair of parallel, horizontal girders. The girders terminate at each end at respective travel units that are in turn mounted to respective rails of a crane runway running orthogonal to the girders. The crab is able to move back and forth along the girders, while the travel units are operable to move the girders back and forth along the crane runway. In this way, the gantry crane system provides translational movement for a load attached to the hoist in two dimensions. This enables the crab to move items suspended on the hoist between two locations, for example two successive stages in a manufacturing path.

If a spreader beam is used with a gantry crane, the potential for problems to arise increases further. For example, in addition to the issues introduced above such as snagging of hoists during lifting, a hoist could snag during translational movement of the crab. Also, if the crab moves too quickly the load could begin to sway to an undesirable extent. Such problems are complex, in that they are influenced by several variables including: the position of the crab; the position of the load; the mass of the load; and the states of the hoists, i.e. whether one or more hoists has snagged or is not attached to the load.

In known systems, many of these variables cannot be detected automatically, even in isolation; it is therefore impossible to diagnose the precise nature and cause of complex problems accurately.

It is against this background that the present invention has been devised.

### Summary of the Invention

According to a first aspect of the invention, there is provided a method of detecting a fault condition in a crane system, the crane system comprising a spreader beam for lifting a load, the spreader beam comprising at least two load points, each load point being arranged to support a respective portion of the load. The method comprises monitoring respective loadings applied to each of the load points, and analysing the loadings to determine whether the crane system is operating outside of one or more acceptable load ranges. The method further comprises monitoring an inclination of the spreader beam relative to a horizontal plane, and comparing the inclination with an inclination threshold to determine whether the crane system is operating outside of the inclination threshold. The method further comprises determining the existence of a fault condition if the crane system is operating outside of the inclination threshold or at least one of the acceptable load ranges.

By measuring the loading at each load point, the method beneficially enables a comparison of the loading at each load point to determine a fault condition. For example, if there is a large discrepancy between two load points, this may indicate an imbalance caused by a snagged hoist or an incorrectly attached hoist.

Each acceptable load range represents an acceptable range for a particular operating parameter, and is defined by upper and lower thresholds. The operating parameter may relate to individual loads applied to each load point, to a load distribution across two or more load points, or to a total overall loading applied over all of the load points. As noted, more than one load range may be used, such that the individual loads, the load distribution and the total load can be referenced in any combination so as to enable the detection of the existence of a wide range of fault conditions.

Alongside this, it is noted that the spreader beam is typically expected to be substantially horizontal in normal operating conditions. Therefore, monitoring the inclination of the spreader beam provides useful insight into its current condition, in that the measurement of inclination can provide an indication of whether the beam has deviated away from its expected orientation.

Analysing the loadings may comprise determining a total overall load applied across all of the load points. Alternatively, the method may comprise monitoring a total overall load applied to the spreader beam separately from monitoring the loadings at each load point. In either case, the method may comprise determining whether the overall load indicates that the crane system is operating outside an acceptable load range that is defined by an upper threshold and a lower threshold each relating to the overall load.

Analysing the loadings may comprise determining a load distribution across the load points. In such embodiments, the method may comprise determining whether the load distribution indicates that the crane system is operating outside of an acceptable load range that is defined by an upper threshold and a lower threshold each relating to the load distribution.

The method may comprise monitoring the inclination of the spreader beam in two orthogonal axes of the horizontal plane to provide an indication of the inclination of the spreader beam in two dimensions, thereby enabling a maximum inclination of the spreader beam to be determined.

The method may comprise adjusting the or each acceptable load range dynamically in response to the monitored loadings. Similarly, the inclination threshold may be adjusted dynamically in response to the monitored inclination. These embodiments beneficially enable the fault diagnosis to adapt to changing operating conditions to avoid nuisance false alarms.

The method may comprise monitoring a vertical speed of the spreader beam, analysing the vertical speed to determine whether the crane system is operating outside of a speed range, and determining the existence of a fault condition if the crane system is operating outside of the speed range. In this case, the method may further comprise adjusting the speed range dynamically in response to the monitored vertical speed. Alternatively or in addition, the method may comprise adjusting the or each acceptable load range dynamically in response to the monitored vertical speed.

Conveniently, the method may be used with a crane system comprising a spreader beam comprising at least four load points.

Additionally, the method may be used with a gantry crane system comprising a crab movably mounted on a set of generally horizontal girders, and including suspending the spreader beam on a hoist that is supported by the crab. In this case, the method may comprise monitoring a speed of the crab along the girders, analysing the crab speed to determine whether the crane system is operating outside of a crab speed range, and determining the existence of a fault condition if the crane system is operating outside of the crab speed range, and optionally adjusting the crab speed range dynamically in response to the monitored crab speed. Where the method is used with a gantry crane system, it may comprise monitoring a direction of movement of the crab along the girders to determine a crab direction, and determining the existence of a fault condition if the crab direction is not the same as a requested crab direction.

With any type of crane system, the method may comprise controlling the crane system so as to take corrective action in the event that the existence of a fault condition is detected.

### Brief Description of the Drawings

In order that the invention may be more readily understood, preferred non-limiting embodiments thereof will now be described, by way of example only, with reference to the accompanying drawings, in which like features are assigned like reference numbers, and in which:
Figure 1 is a schematic perspective view of a known gantry crane system that is suitable for use with and incorporation into embodiments of the invention;
Figure 2 is a perspective view of a spreader beam according to an embodiment of the invention as seen from above;
Figure 3 is a schematic front view of the spreader beam shown in Figure 2;
Figure 4 corresponds to Figure 3, but shows the spreader beam from the side;
Figure 5 corresponds to Figure 3, but shows the spreader beam from below;
Figure 6 is a simplified schematic view of a spreader beam according to an embodiment of the invention with a load attached;
Figure 7 is an enlarged side view of a load point of the spreader beam of Figure 2;
Figure 8 corresponds to Figure 7, but shows the load point in perspective view;
Figure 9 corresponds to Figure 7, but shows the load point from the front;
Figure 10 shows a fault detection system including the spreader beam of Figure 2, showing the physical hardware included in the system;
Figure 11 corresponds to Figure 10, but shows a sensor portion of the system in schematic form including inputs and outputs of the system;
Figure 12 corresponds to Figure 10, but shows a processing portion of the system in schematic form;
Figure 13 is a graph showing an example of fault condition tolerance parameters used by the fault detection system of Figure 10;
Figure 14 is a graph showing another example of fault condition tolerance parameters used by the fault detection system of Figure 10;
Figures 15 to 20 show screenshots of a user interface of the fault detection system of Figure 10;
Figures 21 to 26 show ladder logic diagrams used to calculate dynamic thresholds in a control method for the fault detection system of Figure 10, with Figure 21 relating to a first load distribution threshold, Figure 22 relating to a second load distribution threshold, Figure 23 relating to a movement threshold, Figure 24 relating to a speed test, Figure 25 relating to a total load threshold, and Figure 26 relating to a direction threshold; and
Figure 27 is a flow diagram illustrating a method for detecting a fault condition according to an embodiment of the invention.

### Detailed Description of Embodiments of the Invention

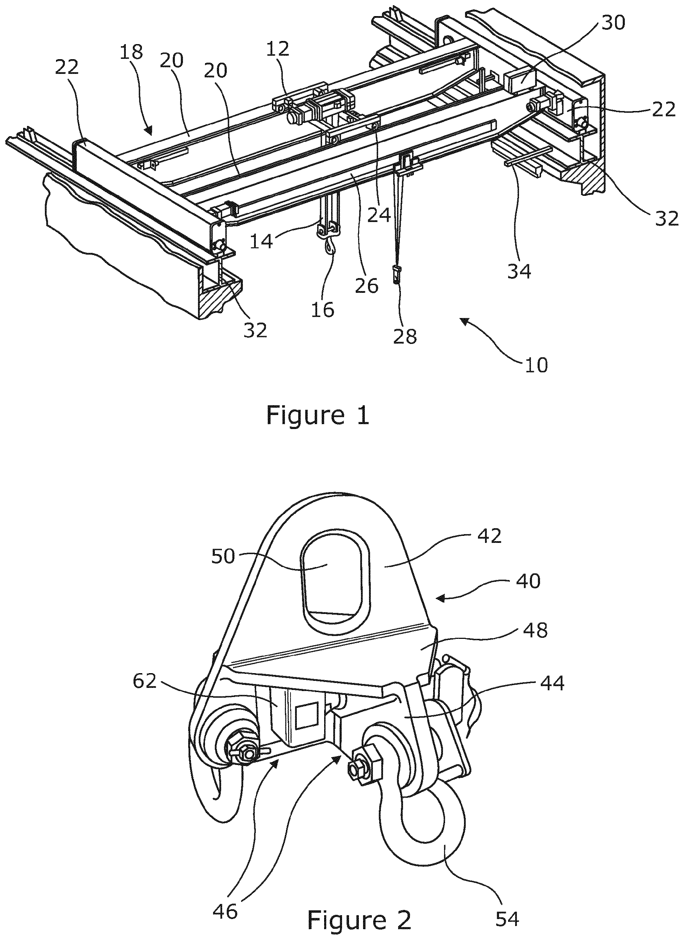

Figure 1 shows a conventional gantry crane system 10 that is suitable for use with embodiments of the invention. It should be appreciated that this crane system 10 is described for illustrative purposes only, and that embodiments of the invention can be used with a wide range of alternative crane systems.

The system includes a crab 12 from which a hoist 14 is suspended. The lower end of the hoist 14 includes an attachment means in the form of a hook 16, to which loads to be lifted and moved by the crane system 10 can be attached. Loads are either attached directly or, as described in more detail below, via an intermediate spreader beam. The hoist 14 can be drawn into the crab 12, corresponding to a lifting operation, and conversely the hoist 14 can be let out from the crab 12, corresponding to a lowering operation.

The crab 12 is supported by a gantry subassembly 18, which is defined by a pair of parallel girders 20 extending between a pair of parallel travel units 22 to form a rigid, generally oblong structure. The crab 12 straddles the girders 20, with each end of the crab 12 having a pair of wheels 24 resting on the upper surface of a respective girder 20. The wheels 24 are powered to enable the crab 12 to be driven back and forth along the girders 20 between the travel units 22, which is commonly referred to as 'cross travel'. Power is typically delivered to the crab 12 through a cable (not shown) that is supported by one of the girders 20, the cable being arranged to fold in a concertina-like manner as the crab 12 moves in one direction along the girder, and to unfold as the crab 12 moves in the opposite direction. The folding cable is attached to a power supply rail 26 that extends along a side of one of the girders 20.

A control pendant 28 dangles from one of the girders 20, to provide a connection point for cabling through which control signals are transmitted to control movement of the crab 12 and the gantry subassembly 18. Further electrical equipment is housed within a box 30 mounted at the end of the same girder. This equipment includes crane drives which are responsible for implementing movement of the crab 12, the gantry subassembly 18 and the hoist 14. The crane drives are simple drive circuits that are configured to supply electrical power to drive the crab or the gantry subassembly in response to control signals provided to the crane drives; the crane drives are not arranged to perform any sort of analysis of operating parameters in this embodiment.

The gantry subassembly 18 is mounted to a crane runway defined by a pair of horizontal rails 32. Each travel unit 22 is aligned with and supported by a respective rail 32, such that the girders 20 are disposed orthogonally to the rails 32. The crane runway also includes a connection point 34 for a power supply to provide power for the travel units 22. The travel units 22 are arranged to move along the rails 32 such that the gantry subassembly 18 moves back and forth along the crane runway. This is commonly referred to as 'long travel'.

In this way, the crab 12 can be moved in two dimensions for positioning at any location within an operating area defined by the width and length of the crane runway. Accordingly, the crab 12 is operable to move items between any two locations within the operating area, which may be, for example, successive stages in a manufacturing path.

The crane system 10 includes various sensing equipment that enables determination of the position of the crab 12 at all times. This in turn provides an indication of the location of any load supported on the hoist of the crab 12.

The sensing equipment includes a draw wire encoder that determines the extent to which the hoist 14 has been drawn in by the crab 12, which in turn indicates the height of the hook 16, and therefore the extent to which the load has been lifted.

The sensing equipment also includes two laser displacement sensing systems that are positioned so as to determine the extent of long travel and cross travel. A first laser sensing system includes a first sensor that is mounted at a fixed location beyond the end of the crane runway. The first sensor is arranged to direct a laser beam towards a first reflector positioned on a girder 20 of the crane gantry subassembly 18. The first laser sensor uses a reflected beam returning from the first reflector to determine the distance to the girder 20, which indicates the extent of long travel. A second laser sensing system includes a second sensor that is mounted on the one of the travel units 22. The second sensor cooperates with a second reflector that is positioned on the crab 12 to determine the extent of cross travel. Therefore, between them the first and second laser sensing systems are able to determine the precise location of the crab 12.

As will now be described, embodiments of the invention provide a spreader beam including sensing means to enable detection of fault conditions as they arise. The representative gantry crane system 10 described above is particularly suited for use with such a spreader beam, due to the common usage of such systems in manufacturing environments where it is desirable to detect faults automatically. As noted previously, the gantry crane system 10 also presents potential for the development of particularly complex fault conditions, and so is a good example on which to base the description of embodiments of the invention. However, as noted previously, spreader beams according to embodiments of the invention can be used with any type of crane system.

A first embodiment of the spreader beam 40 is shown from various angles in Figures 2 to 5. These figures will be described together.

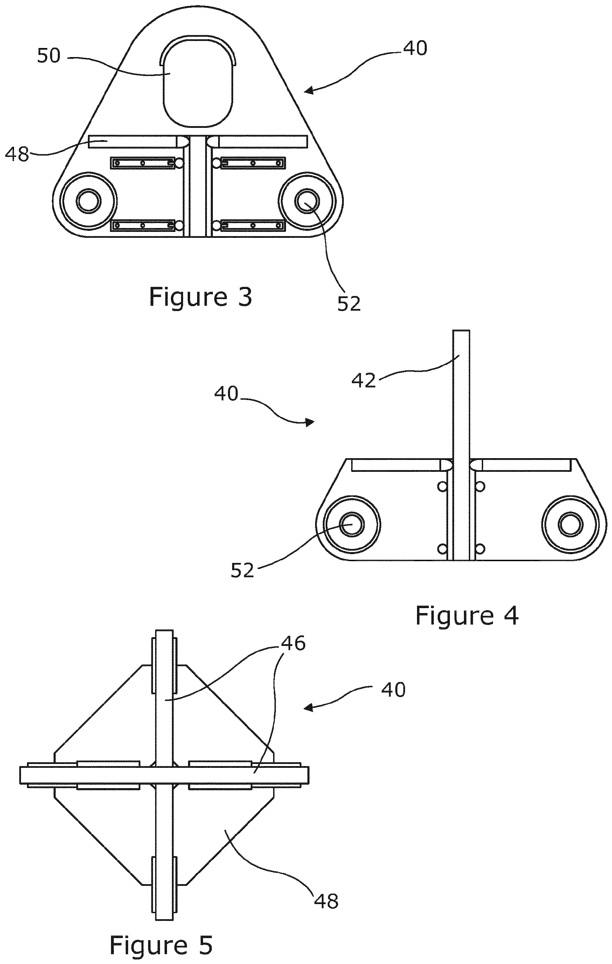

The spreader beam 40 is formed from a generally triangular central plate 42, with mutually opposed side plates 44 extending orthogonally away from a centreline of the central plate 42 in a vertical plane. As best seen in Figure 5, this arrangement creates a cruciform structure in a lower portion of the spreader beam 40, to define four arms 46.

Opposed, triangular flanges 48 extend laterally between an upper surface of each side plate 44 and the central plate 42 to brace the structure and increase rigidity. An exposed upper portion of the central plate 42 above the flanges 48 includes an aperture 50 for attachment to a coupling means such as the hook 16 of the gantry crane system 10 of Figure 1, to enable the spreader beam 40 to be suspended on a crane hoist.

As best seen in Figures 3 and 4, each arm 46 has an aperture disposed at its distal end that defines a load point 52. Accordingly, the spreader beam 40 of this embodiment has four load points 52 in total. A load can be attached to each load point 52 by any suitable means, and may be facilitated by a shackle 54 having its pin inserted through the aperture, as shown in Figure 2.

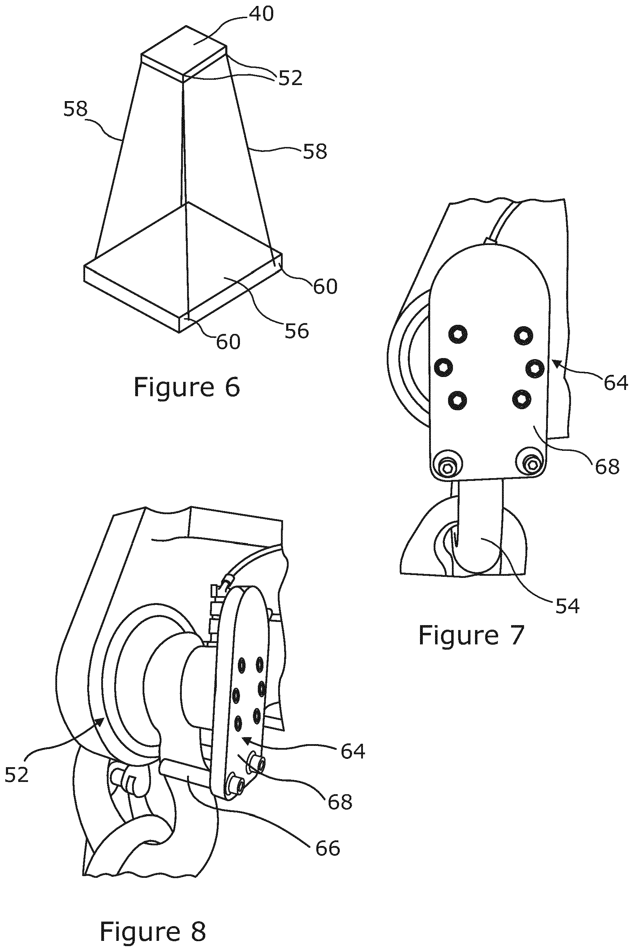

Figure 6 illustrates in simplified form a load 56 being lifted by the above described spreader beam 40. The spreader beam 40 is in turn supported by the hoist of a crane such as the gantry crane 10 of Figure 1, such that the crane lifts the load indirectly via the intermediate spreader beam 40. For simplicity, the crane system is omitted from Figure 6.

In this embodiment, a respective hoist 58 is suspended from each load point 52. Each of the hoists 58, at its lower end, is attached to the load 56 at an attachment point 60. Accordingly, there are four attachment points 60 on the load 56. In this way, the maximum loading at any of the attachment points 60 is significantly reduced compared with lifting the load 56 without a spreader beam 40 by a single attachment point. This reduces the risk of damage to the load 56, and also the risk of hoist failure.

However, the increased number of hoists 58 raises the potential for problems to arise. For example, as described earlier there is a higher risk of a hoist 58 snagging in a system with four hoists 58 compared with one having a single hoist. There is also increased potential for a hoist 58 to be attached incorrectly. In either case, the loading between the hoists 58 will become imbalanced, which can lead to tilting and/or swaying of the load 56. As noted previously, it is highly desirable to detect such problems as soon as possible, to avoid damage to equipment and also to reduce danger to operators.

To address this, the spreader beam 40 is provided with load sensing means that is able to detect individual loadings at each load point 52. In the embodiment shown in Figure 2, the sensing means comprises a sensor module 62 positioned beneath one of the flanges, the sensor module 62 being composed of sensor electronics contained within a housing.

Specifically, the sensor module 62 contains circuitry that is configured to process raw sensor output data signals from the sensing means so as to convert them into signals that can be recognised by other devices. The circuitry may also include amplification and filtering to improve signal quality. In this embodiment, the sensor module 62 also houses part of the sensing means, for example one or more inclinometers, as will be described below. This provides a compact arrangement that reduces installation time. The sensor module 62 further includes a wireless transmitter that is arranged to transmit the converted sensor output signals to a control module for analysis. Finally, the sensor module 62 includes a battery that provides electrical power for the sensing means and the transmitter. In this way, the sensing means of the spreader beam 40 is self-contained and self-powered, conveniently disposing with the need for any form of wired connection to the spreader beam 40. This is a clear advantage in a gantry crane system with movement in three axes within a manufacturing environment, in which additional wires may become easily entangled or snagged on surrounding equipment.

In normal operating conditions, the loadings are expected to be substantially balanced across the load points 52. However, if a fault occurs, one or more load points 52 will experience a sudden and unexpected increase or decrease in loading. As the sensing means is able to monitor each load point 52 individually, sudden changes at any of the load points 52 can be detected and used to trigger an alert to a fault condition. The alert can then be used to implement corrective action to prevent damage to equipment and danger to personnel.

It is noted that when a load 56 is initially lifted there is a period of instability during which the hoists 58 successively become taut as the spreader beam 40 rises and orients to the horizontal plane; the load 56 should only lift once all hoists 58 are taut. This is accounted for when processing data provided by the sensing means, to avoid false alarms.

In one embodiment, shown most clearly in Figures 7 to 9, the sensing means comprises load detection means in the form of load cells 64. These figures show a load point 52 in close-up such that a load cell 64 associated with the load point 52 is clearly visible. In this embodiment, the load cell 64 is integral with the shackle pin. As the location of the shackle pin with respect to the load point 52 is fixed, the load cell 64 can use this point as a datum. Beneath the shackle pin, two load pins 66 extend away from a main body 68 of the load cell 64 to bear against the shackle 54, with one load pin 66 on each side of the shackle 54. When a load 56 induces a strain in the shackle 54, this in turn applies pressure to the load pins 66. The load cell 64 includes a strain gauge arrangement that converts the pressure applied to the pins 66 into a signal indicative of the load on the shackle 54. The load cell 64 is otherwise entirely conventional, and the skilled reader will appreciate that various forms of load cell could be used in this application.

It is noted that each shackle 54 has a respective load cell 64, such that the sensing means comprises four load cells 64 in this embodiment. Accordingly, four signals are produced to indicate the load at each load point 52. These signals are passed to the sensor module 62 through a wire. The sensor module 62 includes amplifiers to amplify the signals. The amplified signals are then forwarded to a control module for processing. The control module does not form part of the spreader beam 40 and so will be described later.

The output signals from the load detection means can be used to provide a first indication of a fault condition in the spreader beam 40. However, the sensing means is also arranged to provide a second indication of a fault by way of slope detection means in the form of an inclinometer, which is situated in the sensor module 62. In this embodiment, the inclinometer measures tilting of the spreader beam 40 in two axes to provide a robust indication of the orientation of the spreader beam 40.

During a fault condition such as snagging of a hoist 58, it is likely that the spreader beam 40 will suddenly tilt away from a generally horizontal orientation. Such movement can be detected by the inclinometer and can be taken to indicate a fault. The direction in which the spreader beam 40 tilts will vary depending on which hoist 58 snags or is incorrectly attached. Therefore, the inclinometer is arranged to measure the tilt of the spreader beam 40 in all directions by resolving tilt measurements in each of the two axes.

Both the tilt of the spreader beam 40 and the individual loading at each load point 52 can be indicative of a fault condition. As the spreader beam 40 includes means for monitoring each of these parameters, more robust fault detection can be implemented by comparing both sets of data, namely load data and tilt data.

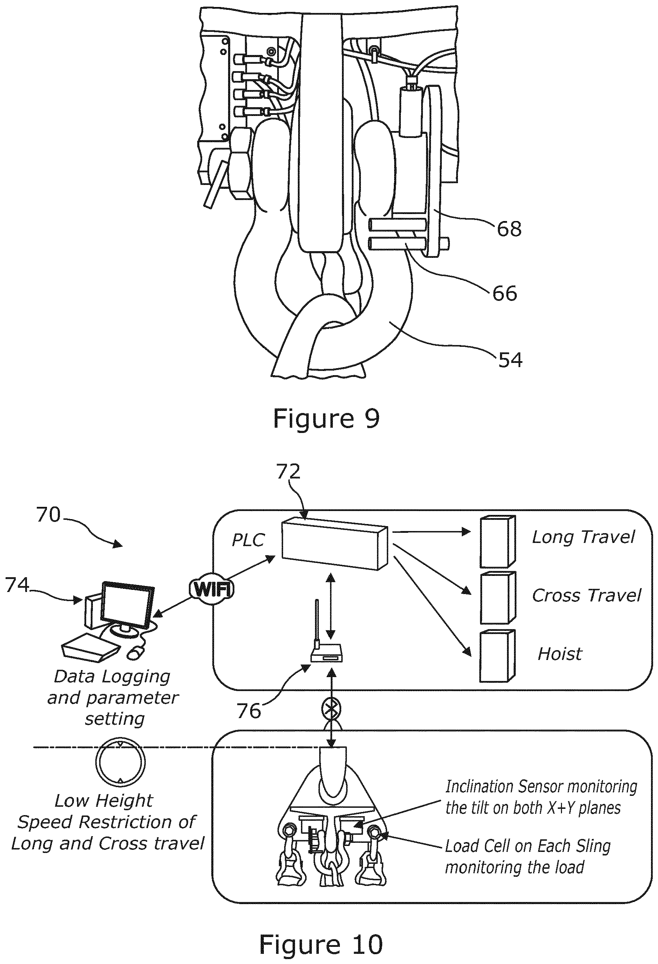

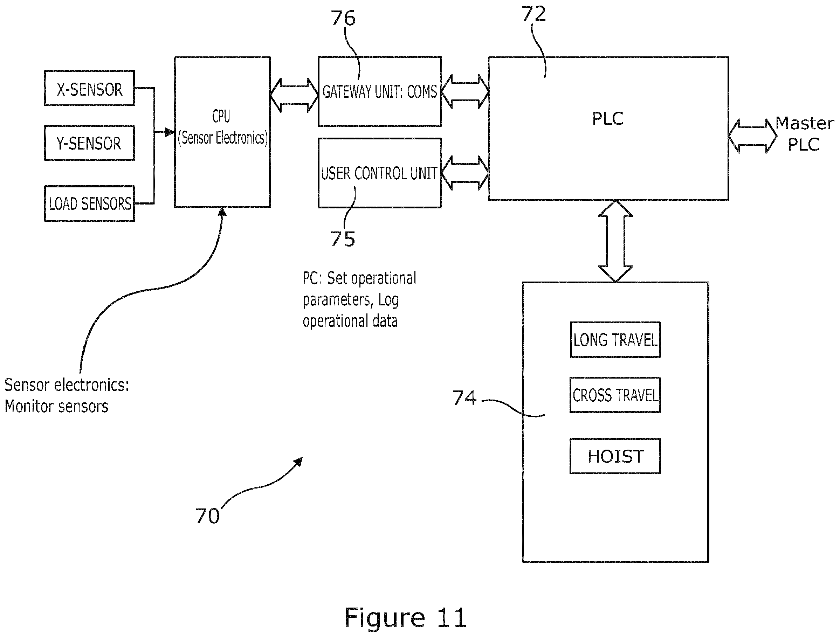

Moving on now to Figures 10 and 11, a control architecture 70 for the above gantry crane system 10 is illustrated. The architecture 70 is shown pictorially in Figure 10, and schematically in Figure 11.

In this embodiment, the control module takes the form of a programmable logic controller (PLC) 72 that is arranged to collect output signals from the various sensors of the crane system 10, and to analyse those signals to determine a fault condition. The PLC 72 may, for example, be carried on a girder 20 of the gantry subassembly 18. In such an arrangement, processed signals and fault alerts are sent through the control pendant 28 to a computer 74, which logs the data. The computer 74 also provides a user interface (Ul) configured to present fault condition alerts to an operator, and to enable the operator to view historical data and to adjust operating parameters such as a maximum lifting speed and height restrictions. The Ul also provides a level of control that enables the operator to perform specific actions, such as stopping and shutting down the crane 10. A user control unit 75 is also provided that enables the operator to input commands manually to control the crane system. These commands are transmitted to the PLC 72, which implements them in accordance with system operating parameters.

The PLC 72 is also arranged to control the crane 10 in response to control signals received from the computer 74 in combination with commands received from the user control unit 75 and the sensor output signals. The control signals indicate the operating parameters for the crane system 10 as defined by the operator through the Ul. Alongside this, the PLC 72 analyses the sensor output signals to determine fault conditions in accordance with parameters defined by the operator. In the event of a fault condition, the PLC 72 is arranged to override the control signals to implement corrective action.

In an alternative embodiment in which more than one crane system 10 is controlled over a common network, each crane system 10 has a respective slave PLC 72 that is arranged to communicate with a master PLC 72. The master PLC 72 is arranged to receive sensor output signals from each of the slave PLCs 72, and to process the signals to detect fault conditions. Meanwhile, each slave PLC 72 implements control of its respective crane system 10 in accordance with control signals received from the master PLC 72. Therefore, in this arrangement processing of sensor output signals for fault detection is centralised in the master PLC 72. This provides an efficient arrangement in which changes to operating parameters can be implemented centrally and therefore quickly.

In this embodiment, the sensing means of the spreader beam 40 communicates wirelessly with the PLC 72, for example using Bluetooth®. The wireless signals are created and broadcast by the transmitter of the sensor module 62, and are received by a wireless receiver 76 connected to the PLC 72. Separately, signals from the sensing equipment of the gantry system 10, such as the draw wire encoder and the laser displacement sensing systems, are sent through a wired connection to the PLC 72. The signals are sent using an industrial network protocol such as Profibus.

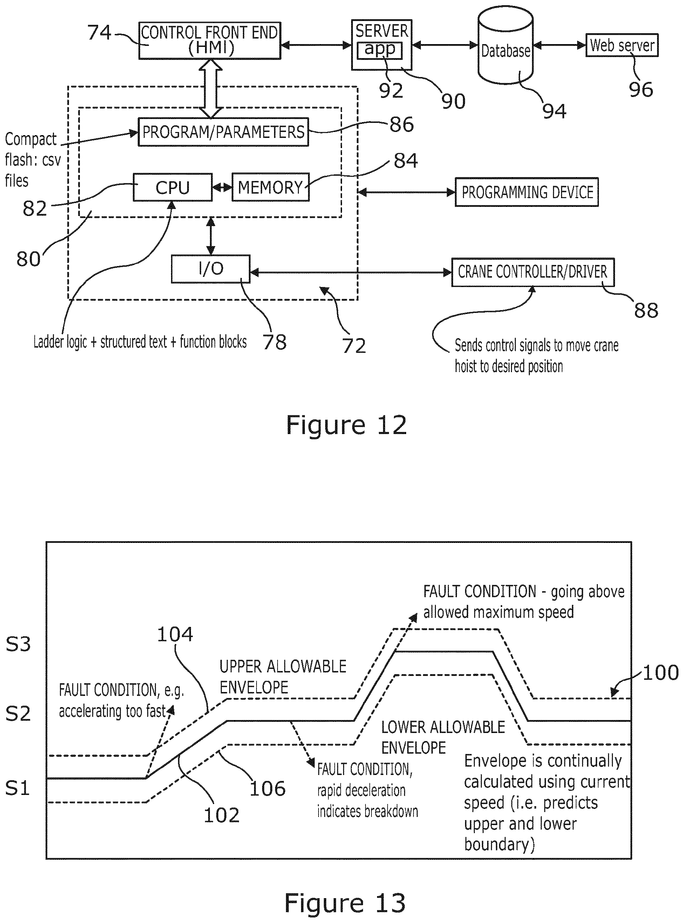

Figure 12 shows the internal architecture of the PLC 72, along with functional modules of the computer 74 with which the PLC 72 communicates. As illustrated, the PLC 72 includes an input/output (I/O) module 78, and a processing module 80 including a central processing unit (CPU) 82, a random access memory (RAM) module 84, and a non-volatile memory module 86 such as a Compactflash memory. One or more control programs or algorithms are stored in the non-volatile memory 86, along with the operating parameters. As shown, a control front end including a human-machine interface (HMI), namely the computer 74, has both read access and write access to the non-volatile memory 86, enabling adjustment of the operating parameters and the control programs, as well as enabling direct control of the crane 10 through the PLC 72.

The I/O module 78 is in communication with a crane controller 88 such as the crane drive described above. Control signals generated by the processing module 80 or by an operator through the Ul are sent to the crane drive from the I/O module 78 to effect movement of the crane 10. The I/O module 78 also reads data from the crane drive, as is standard in drive systems of this nature, the data primarily being gathered for diagnostic purposes.

The computer 74 is connected to a server 90 through a local network. An application 92 runs on the server 90 that receives and stores operating data for the crane system 10 in a database 94. The database 94 is also accessible by a web server 96, which enables a web-based implementation of the system which conveniently makes use of readily available telecommunications infrastructure, and also creates the potential to centralise control of multiple dispersed systems if required. The inclusion of the database 94 allows historical operating data to be stored for subsequent analysis, for example for diagnostic purposes.

Figure 13 illustrates a typical operating envelope 100 for the crane system 10 which can be used to determine a fault condition. The graph shows the crane moving at three distinct steady state speeds, S1 to S3, corresponding to the horizontal portions of the graph. These are discrete operational speeds of the crane system 10, and could relate to either vertical or translational movement. The angled portions of the graph correspond to periods of acceleration or deceleration between the set operational speeds. The solid central line 102 of the graph represents the intended travel profile, while the upper and lower dashed lines 104, 106 represent the acceptable deviation from the intended profile, to define an allowable envelope 100. The acceptable deviation is calculated to account for the characteristics of the crane system, such as the power of the crane drives and the system inertia, as well as the size, shape and mass of a load 56 to be moved by the crane 10. The performance of the control system in terms of overshoot, undershoot and linearity is also taken into account. It should be appreciated that the allowable envelope 100 is determined dynamically to account for varying demands placed on the system: although the crane system 10 may be used in a repetitive and predictable manner in a production environment, typically crane systems 10 are at least occasionally required to undertake non-routine operations for which the allowable envelope 100 cannot be determined in advance. For example, the crane operator may wish to move an object between two non-routine locations, to lift an unusually heavy object, or to move more quickly than usual. For this reason, the envelope 100 is determined in real-time, taking into account all instantaneous operating parameters.

The data shown in the graph may conveniently be derived from the sensing equipment provided with the gantry crane system 10, namely the x and y laser displacement sensing systems and the draw wire encoder.

Deviation will occur if the crane 10 moves at an incorrect steady state speed, or if it accelerates too quickly or too slowly. In either case, deviation outside the allowable envelope 100 is likely to be a sign of a developing problem, such as snagging of a hoist 58 or incorrect attachment of the load 56. Rapid deceleration may be indicative of a breakdown. Therefore, any deviation outside the allowable envelope 100 is treated as indicative of a fault condition, and an alert is generated and displayed to the operator, who can then take corrective action. Alternatively, in certain fault conditions the crane system 10 can implement corrective action automatically, which is simply reported to the operator. Examples of corrective action that the crane system 10 can take include: slowing movement of the crab 12, the hoist 14 or the gantry subassembly 18; stopping movement of the load 56 altogether; or stopping and then moving in a reverse direction, for example by lowering a hoist 14 that was rising when a fault occurred.

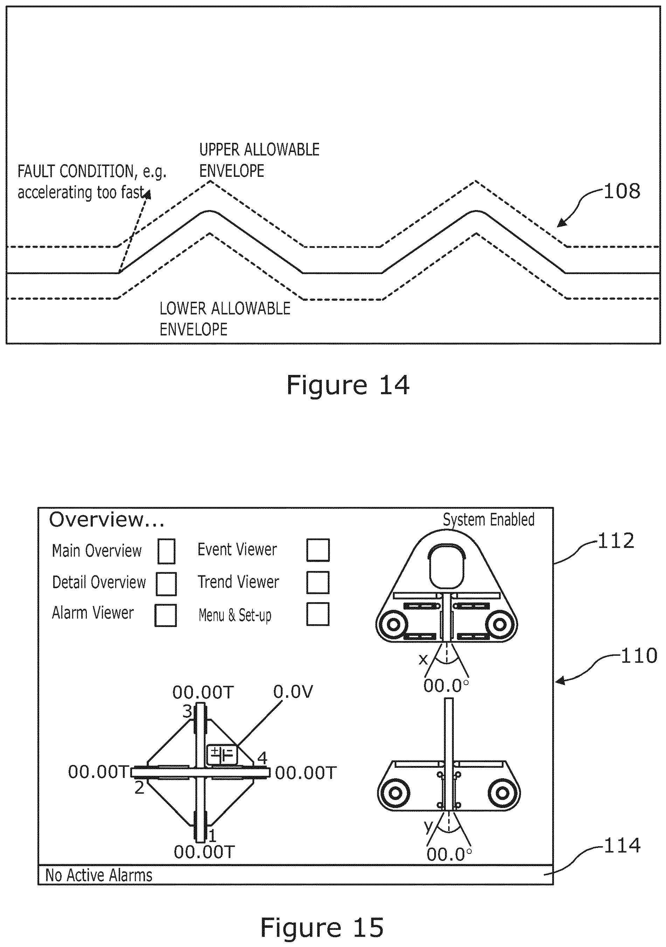

Acceptable tolerances are also applied to the instantaneous loadings reported at each load point 52 of the spreader beam 40, and this is shown in Figure 14. As with the speed data in Figure 13, an allowable envelope 108 is applied to the load data to define fault conditions. The load at each load point 52 is expected to be consistent throughout a crane movement, except during periods of acceleration or deceleration where the load increases or decreases accordingly as noted above. A filter may be applied when a load 56 is initially lifted, where individual loads may be very high for short periods as each hoist 58 successively jolts taut. It is noted that the load response profile may follow a more curved path than the relatively linear path depicted in Figure 14. It should also be noted that the load response profile shown in Figure 15 is not intended to correspond to the speed profile of Figure 14.

Figure 15 is a screenshot of a Ul 110 that is suitable for use with the crane system 10. It should be appreciated that the Ul 110 shown is entirely representative and could vary considerably in design and implementation. The screenshot is of a "Main Overview" screen 112 that an operator would typically monitor. This screen includes graphical representations of the spreader beam 40 from various perspectives, and shows instantaneous measurements for each of the load cells, as well as the inclinometers, all of which update in real-time.

A status bar 114 extends along a bottom edge of the screen 112, which serves as a primary means of communicating an alert to the operator. In Figure 15 the bar 114 is green, indicating that no faults have been detected and the crane 10 is operating within acceptable limits. On detection of a fault condition, the status bar 114 will change colour to alert the operator visibly, with alerts graded from yellow to amber and through to red according to the severity of the fault.

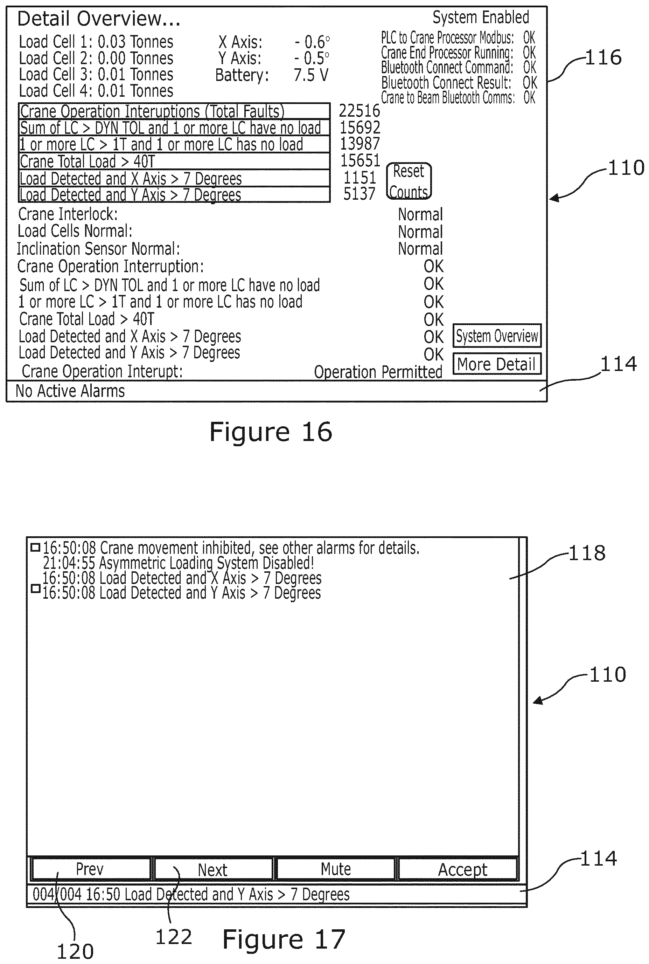

The operator can navigate between six main screens by clicking one of six corresponding icons in the upper left corner of the screen. In this embodiment, the available screens are: "Main Overview", which is the screen that is selected in Figure 15; "Detail Overview"; "Alarm Viewer"; "Event Tracker"; "Trend Viewer"; and "Menu & Set-up". It should be noted that the status bar 114 appears on all screens such that the operator is alerted to faults irrespective of which screen is displayed. Each of the screens will now be briefly described with reference to Figures 16 to 20.

As shown in Figure 16, the "Detail Overview" 116 includes textual data showing the same measurements for the load cells and the inclinometers as is available on the "Main Overview" screen 112. In addition, this screen 116 lists the status of various other elements of the crane system 10, as well as a summary of historical crane operation data.

The "Alarm Viewer" 118, shown in Figure 17, lists recent alarm events, including a brief description of each alarm. This screen includes a "previous" button 120 and a "next" button 122 to enable the operator to navigate a series of alarm viewer screens to see historical alarms.

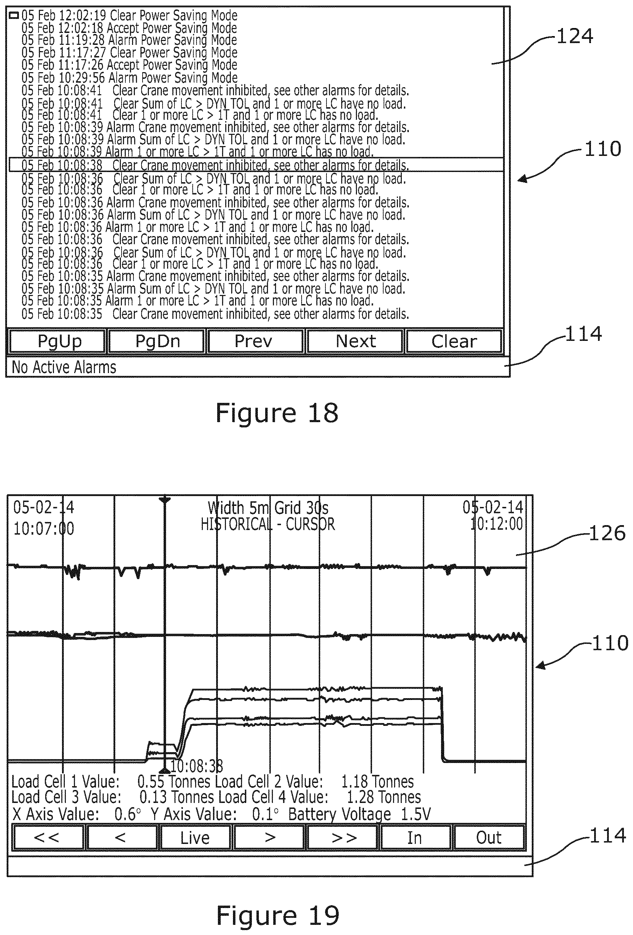

Figure 18 shows the "Event Viewer" screen 124, which is similar in format to the "Alarm Viewer" screen 118 but includes a more comprehensive list of events including crane operations and status updates in addition to alarm events.

The "Trend Viewer" screen 126 shown in Figure 19 charts the load cell and inclinometer data over a pre-defined period, for example 5 minutes. This enables the operator to see trends in the spreader beam data, which allows for detection of more subtle problems that may not be detected by the software, for example an unexpected distribution of loads around the load points 52 of the spreader beam 40. This therefore increases the ability of the system to enable remote identification of fault conditions in the crane system 10.

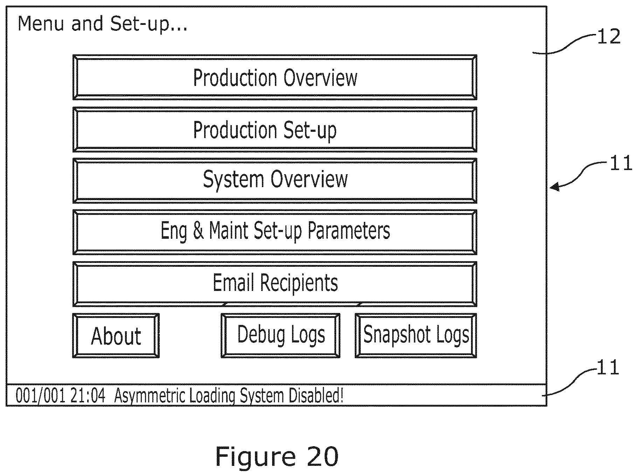

The "Menu & Set-up" screen 128 in Figure 20 includes buttons that allow the operator to navigate to various sub-screens in order to adjust operating parameters and perform other functions. These features broadly correspond to set-up menus for similar Ul software that will be familiar to the skilled person, and so are not described further here.

The above described UI 110 provides the operator with everything necessary to monitor the status of the crane system 10 to ensure that it is operating correctly. In this way, the Ul 110 together with the control system allow remote fault detection for the gantry crane system 10, therefore enabling rapid implementation of corrective action to prevent damage to the crane 10, the load 56, and surrounding equipment, whilst removing the operator from the vicinity of the crane 10 to avoid danger. The variety of faults that can be detected automatically is greatly enhanced through the inclusion of the spreader beam sensing means, namely the load cells and the inclinometers, thereby maximising the effectiveness of fault detection and correction.

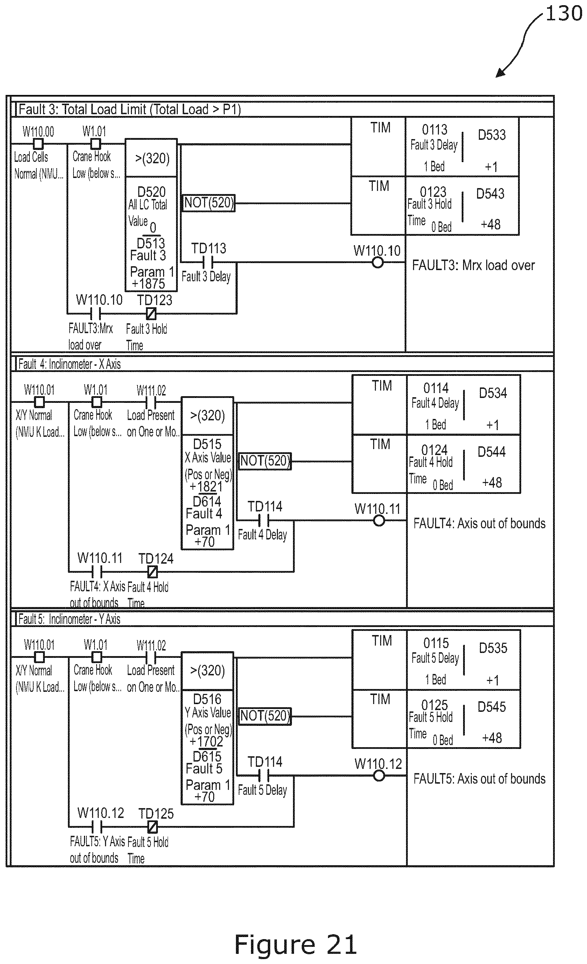

Figures 21 to 26 illustrate graphical ladder logic of a type that will be familiar to the skilled person, with which the PLC 72 of the above control architecture 70 can be programmed so as to calculate dynamic thresholds for various operating parameters of the crane system 10. The figures represent a series of programs or routines that execute on the PLC 72 to monitor the operating parameters and adjust the thresholds accordingly. The series of routines shown are based on a system including a spreader beam 40 with four load points 52, in which the load 56 is supported by slings that are carried between diametrically opposed load points 52 of the spreader beam 40.

Figure 21 shows a first routine 130 that is used to determine an appropriate threshold for the total load measured across all four load points 52, together with the overall inclination of the spreader beam 40 as measured by the inclinometers. It is noted that the expected total load is not typically known in advance as the crane system 10 may be used to lift a variety of loads. Therefore, the first routine 130 is configured to adjust a threshold range of acceptable values for the total load dynamically in response to real-time load measurements as the load 56 is lifted.

It is noted that the load measurements produced by the load sensing means will vary not only according to the weight of the load 56, but also as a result of vertical acceleration of the load 56 as it is raised. As the load 56 accelerates during the initial stages of lifting, the force required to accelerate the mass of the load 56 increases the overall load measured at the load points 52. Conversely, when the load 56 decelerates as it approaches its highest point, the overall force drops below the weight of the load 56 as the deceleration force acts in the opposite direction to the weight. Typically, the first routine 130 settles on a value for the overall weight of the load within a few seconds of lifting the load 56, and thereafter this value is adjusted only slightly to account for deviation in load measurements resulting from movement of the load 56. Load measurements can also be cross-referenced against speed data, in that periods of steady speed will correspond to load measurements that reflect the true weight of the load 56, whereas periods of acceleration and deceleration should be reflected in the load measurements as an overall increase or decrease in load respectively.

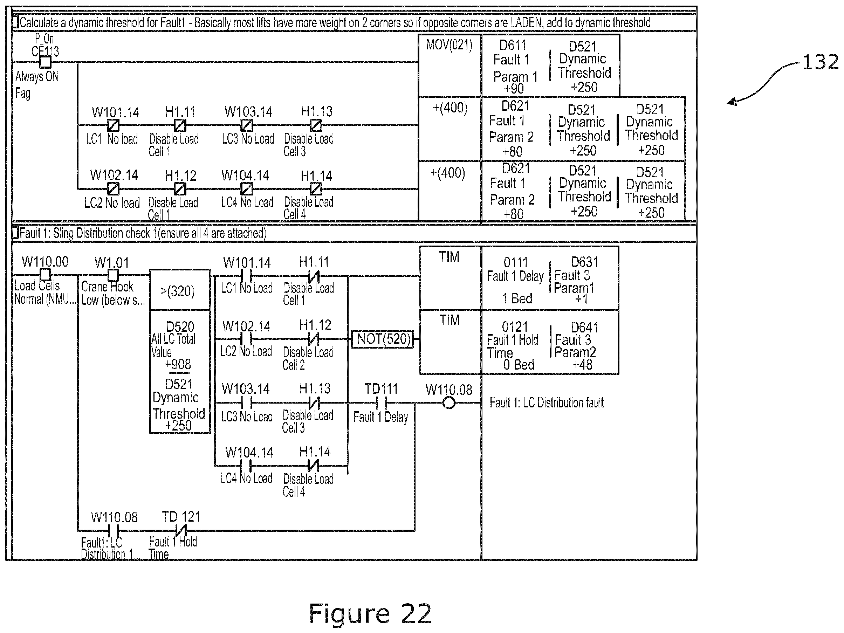

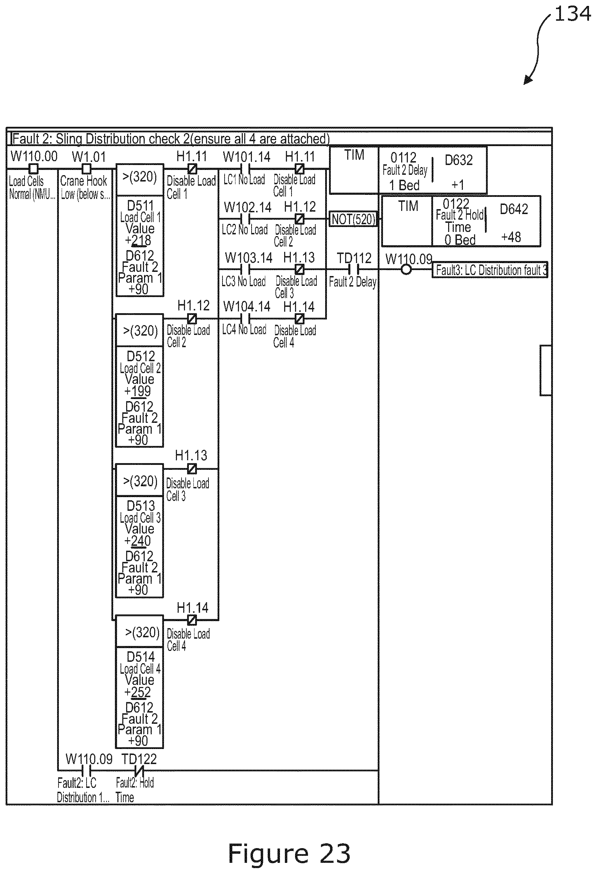

Figures 22 and 23 relate to a second routine 132 and a third routine 134 respectively, which are both load distribution tests. These routines 132, 134 effect monitoring of the output of the load sensors, and operate to determine whether the signals received from those sensors remain acceptable.

As noted above, filtering is applied as the load 56 is initially raised to account for the high forces generated in the slings as they tighten suddenly on taking the load 56. After this, the second and third routines 132, 134 monitor the load measurements to determine whether the load distribution across the load points 52 is acceptable, taking into account the fact that, in a system with four load points 52, one pair of diametrically opposed load points 52 will typically carry a higher proportion of the load 56 than the other pair. This is due to the length of the slings and their positioning relative to the centre of mass of the load 52. The sling that carries the higher proportion of the load typically remains taut throughout the crane movement, whereas the distribution of the remainder of the load across the other load points 52 may vary as the load 56 pivots or rocks around the taut sling to some extent. The extent of this variation will depend on the overall mass of the load 56 and also its shape. Therefore, the load distribution threshold is adjusted dynamically to account for these factors, in the context of the overall total load as determined by the parallel routine described above.

Aside from this, the second and third routines 132, 134 also include checks to ensure that the load 56 is correctly attached to all four load points 52. This entails checking that individual loadings at each load point 52 are non-zero, and also that none of those loadings exceeds a threshold that would be indicative of one of the load points 52 carrying more of the weight of the load 56 than it should as a result of incorrect attachment of the load 56 to one of the other load points 52.

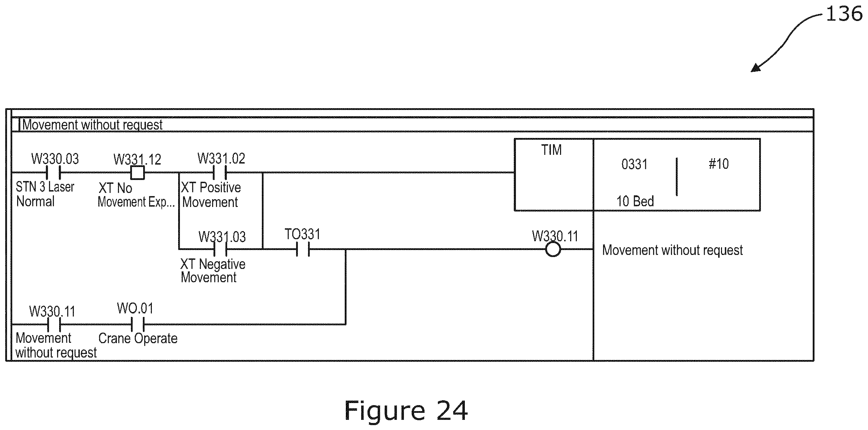

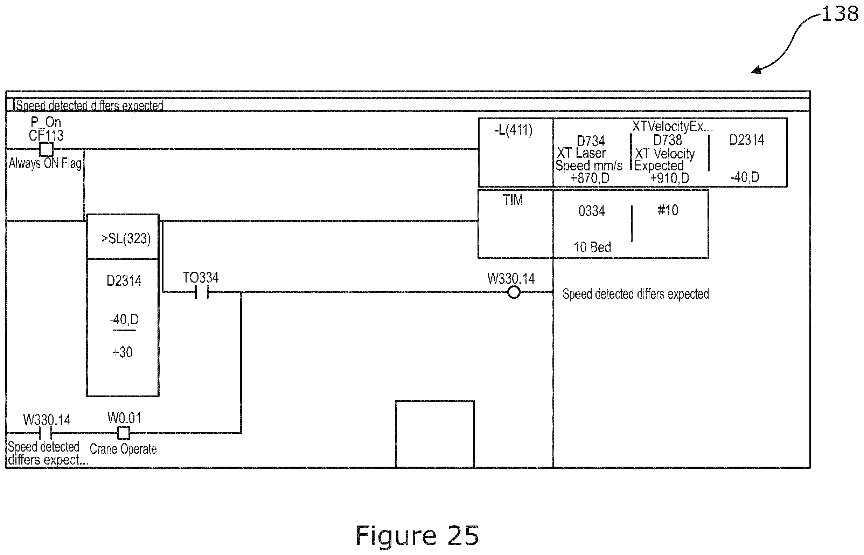

The ladder logic shown in Figure 24 defines a fourth routine 136 for identifying whether a crane is moving when it should not be, namely when no movement has been requested. Such movement is detected using the signals received from the two laser displacement sensing systems. Figure 25 relates to a fifth routine 138 defining a speed test, which again uses data from the two laser displacement sensing systems, in this case monitoring the displacement over time to derive the crane speed. This routine 138 uses this data to dynamically adjust an acceptable speed envelope such as those described earlier with reference to Figures 13 and 14.

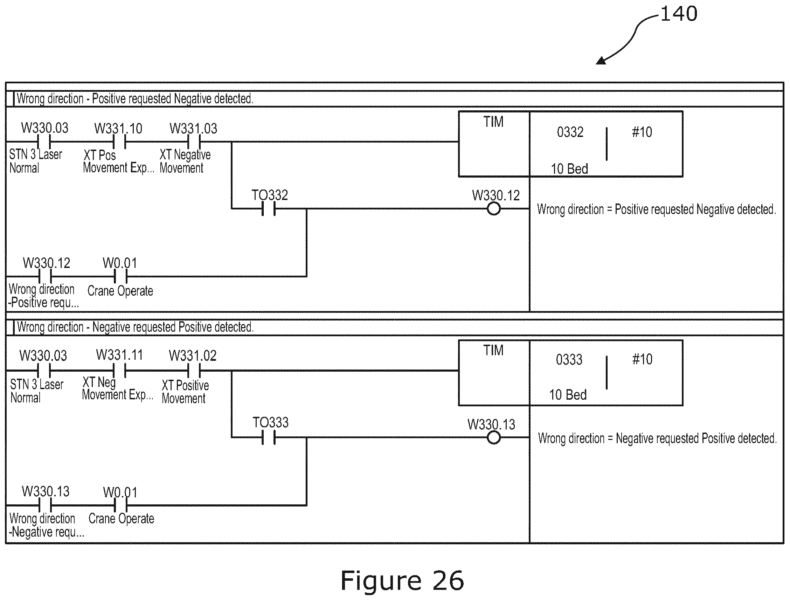

Lastly, a sixth routine 140, shown in Figure 26, also processes the positional data provided by the laser displacement sensing systems, in this case to ascertain whether the crane is moving in the wrong direction.

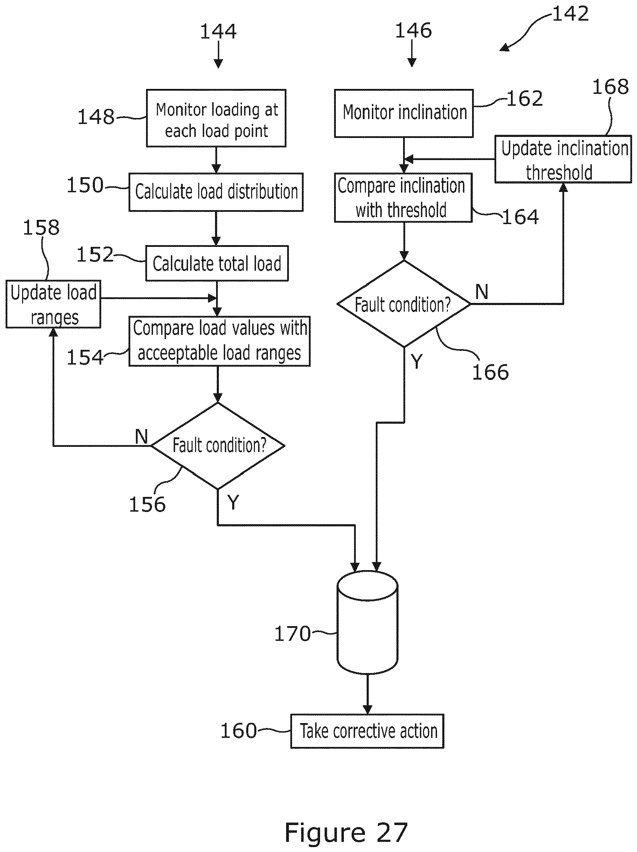

Turning finally to Figure 27, a flow diagram is shown that represents a process 142 for determining the existence of a fault condition using the above described apparatus. This process 142 focusses on measurements relating to loadings at each load point 52 and the inclination of the spreader beam 40, although it should be appreciated that the process 142 can be extended to include further system operating parameters such as: a vertical speed of the spreader beam 40 as it is raised on the hoist 14; a speed of movement of the crab 12; a position of the crab 12; and a direction of movement of the crab 12.

The process comprises a pair of parallel sub-processes 144, 146, shown to the left and to the right in Figure 27. The left sub-routine 144 begins at step 148 with monitoring individual loadings at each load point 52. It should be noted that this step 148 iterates continuously to provide real-time measurements for the loadings at each load point 52. From these measurements, further operating parameters including a load distribution and a total overall load are calculated at steps 150 and 152 respectively. The calculated values are then compared at step 154 with corresponding load ranges that define acceptable values for those operating parameters. If the monitored values fall within the respective acceptable load ranges, the process determines at step 156 that there is no fault condition with respect to the load measurements. The monitored loadings are then used to update the load ranges dynamically at step 158, as described above. The left sub-process 144 then repeats.

If the monitored values fall outside the respective acceptable ranges, the process determines at step 156 that there is a fault condition with respect to the load measurements. The process then continues with the crane system 10 taking at step 160 corrective action in response to the fault condition.

The sub-routine 146 shown to the right in Figure 27 commences with monitoring at step 162 the inclination of the spreader beam 40. As for the monitoring of the loadings, monitoring of the inclination of the spreader beam 40 iterates continuously to provide real-time inclination data. The inclination data is compared at step 164 with an inclination threshold, to determine at step 166 whether there is a fault condition. If there is no fault condition, the inclination threshold is updated at step 168 as required, and the right sub-process 146 repeats.

If the inclination is above the inclination threshold, the right sub-process 146 determines at step 166 that there is a fault condition with respect to the inclination. The right sub-process 146 then continues with the crane system 10 taking at step 160 corrective action in response to the fault condition.

It is noted that the process 142 proceeds to the corrective action step 160 if a fault condition is detected in either sub-process 144, 146. This is represented in Figure 27 by the Boolean 'OR' operator 170 at which the paths of both sub-processes 144, 146 converge. The nature of corrective action that is taken is tailored to the type of fault that has been detected, and may include slowing, stopping or even reversing movement of the crab 12 or the hoist 14, for example.

Once corrective action has been taken, the crane system 10 is typically placed into a safety mode until an operator manually confirms that it is safe to continue with the crane operation. It will be appreciated by a person skilled in the art that the invention could be modified to take many alternative forms to that described herein, without departing from the scope of the appended claims.

For example, while the spreader beam described above is cruciform in structure with four load points, many other structures are possible, including a simple beam with a load point at each end. A respective load cell for each load point can still be provided in any variation, and similarly the inclinometers can be utilised in the same manner as described above.

The above described process for detection of a fault condition can be expanded to account for many additional operating parameters, and the more parameters that are involved, the wider the range of types of fault condition that can be detected. Alternatively, the process can be simplified, for example by removing the steps of calculating the load distribution or the total load, to use just the individual loadings for fault detection.

## Claims

1. A method of detecting a fault condition in a crane system (10), the crane system comprising a spreader beam (40) for lifting a load, the spreader beam comprising at least two load points (52), each load point being arranged to support a respective portion of the load, whereby the method comprises:
monitoring respective loadings applied to each of the load points (52);
analysing the loadings to determine whether the crane system is operating outside of one or more acceptable load ranges;
monitoring an inclination of the spreader beam relative to a horizontal plane;
comparing the inclination with an inclination threshold to determine whether the crane system is operating outside of the inclination threshold; and
determining the existence of a fault condition if the crane system is operating outside of the inclination threshold or at least one of the acceptable load ranges.

2. The method of claim 1, wherein analysing the loadings comprises determining a total overall load applied across all of the load points (52).

3. The method of claim 1, comprising monitoring a total overall load applied to the spreader beam (40) separately from monitoring the loadings at each load point (52).

4. The method of claim 2 or claim 3, comprising determining whether the overall load indicates that the crane system (10) is operating outside an acceptable load range that is defined by an upper threshold and a lower threshold each relating to the overall load.

5. The method of any preceding claim, wherein analysing the loadings comprises determining a load distribution across the load points (52).

6. The method of claim 5, comprising determining whether the load distribution indicates that the crane system (10) is operating outside of an acceptable load range that is defined by an upper threshold and a lower threshold each relating to the load distribution.

7. The method of any preceding claim, comprising monitoring the inclination of the spreader beam (40) in two orthogonal axes of the horizontal plane.

8. The method of any preceding claim, comprising adjusting the or each acceptable load range dynamically in response to the monitored loadings.

9. The method of any preceding claim, comprising adjusting the inclination threshold dynamically in response to the monitored inclination.

10. The method of any preceding claim for detecting a fault condition in a crane system (10) comprising a spreader beam (40) comprising at least four load points (52).

11. The method of any preceding claim, comprising monitoring a vertical speed of the spreader beam (40), analysing the vertical speed to determine whether the crane system (10) is operating outside of a speed range, and determining the existence of a fault condition if the crane system is operating outside of the speed range.

12. The method of claim 11, comprising adjusting the speed range dynamically in response to the monitored vertical speed.

13. The method of claim 11 or claim 12, comprising adjusting the or each acceptable load range dynamically in response to the monitored vertical speed.

14. The method of any preceding claim, for detecting a fault condition in a gantry crane system (10) comprising a crab (12) movably mounted on a set of generally horizontal girders (20), and including suspending the spreader beam (40) on a hoist (58) that is supported by the crab.

15. The method of claim 14, comprising monitoring a speed of the crab (12) along the girders (20), analysing the crab speed to determine whether the crane system (10) is operating outside of a crab speed range, and determining the existence of a fault condition if the crane system is operating outside of the crab speed range.

16. The method of claim 15, comprising adjusting the crab speed range dynamically in response to the monitored crab speed.

17. The method of any of claims 14 to 16, comprising monitoring a direction of movement of the crab (12) along the girders (20) to determine a crab direction, and determining the existence of a fault condition if the crab direction is not the same as a requested crab direction.

18. The method of any preceding claim, further comprising the step of controlling the crane system (10) so as to take corrective action in the event that the existence of a fault condition is detected.

## Patentansprüche

1. Verfahren zum Erfassen einer Fehlerbedingung in einem Kransystem (10), wobei das Kransystem eine Traverse (40) zum Anheben einer Last umfasst, wobei die Traverse wenigstens zwei Lastpunkte (52) umfasst, wobei jeder Lastpunkt so angeordnet ist, dass er einen jeweiligen Abschnitt der Last stützt, wodurch das Verfahren Folgendes umfasst:
Überwachen der jeweiligen Belastungen, die auf jeden der Lastpunkte (52) angewandt werden;
Analysieren der Belastungen, um zu bestimmen, ob das Kransystem außerhalb eines oder mehrerer zulässiger Lastbereiche betrieben wird;
Überwachen einer Neigung der Traverse in Bezug auf eine horizontale Ebene;
Vergleichen der Neigung mit einem Neigungsschwellenwert, um zu bestimmen, ob das Kransystem außerhalb des Neigungsschwellenwerts betrieben wird; und
Bestimmen des Vorhandenseins einer Fehlerbedingung, wenn das Kransystem außerhalb des Neigungsschwellenwerts oder wenigstens eines der zulässigen Lastbereiche betrieben wird.

2. Verfahren nach Anspruch 1, wobei ein Analysieren der Belastungen ein Bestimmen einer gesamten Gesamtlast, die über alle der Lastpunkte (52) angewandt wird, umfasst.

3. Verfahren nach Anspruch 1, umfassend ein Überwachen einer auf die Traverse (40) angewandten gesamten Gesamtlast getrennt von einem Überwachen der Belastungen an jedem Lastpunkt (52).

4. Verfahren nach Anspruch 2 oder 3, umfassend das Bestimmen, ob die Gesamtlast anzeigt, dass das Kransystem (10) außerhalb eines zulässigen Lastbereichs betrieben wird, der durch einen oberen Schwellenwert und einen unteren Schwellenwert definiert ist, die sich jeweils auf die Gesamtlast beziehen.

5. Verfahren nach einem der vorhergehenden Ansprüche, wobei das Analysieren der Belastungen das Bestimmen einer Lastverteilung über die Lastpunkte (52) hinweg umfasst.

6. Verfahren nach Anspruch 5, umfassend das Bestimmen, ob die Lastverteilung anzeigt, dass das Kransystem (10) außerhalb eines zulässigen Lastbereichs betrieben wird, der durch einen oberen Schwellenwert und einen unteren Schwellenwert definiert ist, die sich jeweils auf die Lastverteilung beziehen.

7. Verfahren nach einem der vorhergehenden Ansprüche, umfassend das Überwachen der Neigung der Traverse (40) in zwei orthogonalen Achsen der horizontalen Ebene.

8. Verfahren nach einem der vorhergehenden Ansprüche, umfassend ein dynamisches Anpassen des oder jedes zulässigen Lastbereichs als Reaktion auf die überwachten Belastungen.

9. Verfahren nach einem der vorhergehenden Ansprüche, umfassend das dynamische Anpassen des Neigungsschwellenwerts als Reaktion auf die überwachte Neigung.

10. Verfahren nach einem der vorhergehenden Ansprüche zum Erfassen einer Fehlerbedingung in einem Kransystem (10), das eine Traverse (40) umfasst, die wenigstens vier Lastpunkte (52) umfasst.

11. Verfahren nach einem der vorhergehenden Ansprüche, umfassend das Überwachen einer vertikalen Geschwindigkeit der Traverse (40), das Analysieren der vertikalen Geschwindigkeit, um zu bestimmen, ob das Kransystem (10) außerhalb eines Geschwindigkeitsbereichs betrieben wird, und das Bestimmen des Vorhandenseins einer Fehlerbedingung, wenn das Kransystem außerhalb des Geschwindigkeitsbereichs betrieben wird.

12. Verfahren nach Anspruch 11, umfassend das dynamische Anpassen des Geschwindigkeitsbereichs als Reaktion auf die überwachte vertikale Geschwindigkeit.

13. Verfahren nach Anspruch 11 oder 12, umfassend das dynamische Anpassen des oder jedes zulässigen Lastbereichs als Reaktion auf die überwachte vertikale Geschwindigkeit.

14. Verfahren nach einem der vorhergehenden Ansprüche zum Erfassen einer Fehlerbedingung in einem Portalkransystem (10), das eine Laufkatze (12) umfasst, die beweglich auf einem Satz von im Allgemeinen horizontalen Trägern (20) montiert ist, und das ein Aufhängen der Traverse (40) an einem Hebezeug (58) einschließt, das von der Laufkatze gestützt wird.

15. Verfahren nach Anspruch 14, umfassend das Überwachen einer Geschwindigkeit der Laufkatze (12) entlang der Träger (20), das Analysieren der Laufkatzengeschwindigkeit, um zu bestimmen, ob das Kransystem (10) außerhalb eines Laufkatzengeschwindigkeitsbereichs betrieben wird, und das Bestimmen des Vorhandenseins einer Fehlerbedingung, wenn das Kransystem außerhalb des Laufkatzengeschwindigkeitsbereichs betrieben wird.

16. Verfahren nach Anspruch 15, umfassend das dynamische Anpassen des Laufkatzengeschwindigkeitsbereichs als Reaktion auf die überwachte Laufkatzengeschwindigkeit.

17. Verfahren nach einem der Ansprüche 14 bis 16, umfassend das Überwachen einer Bewegungsrichtung der Laufkatze (12) entlang der Träger (20) zum Bestimmen einer Laufkatzenlaufrichtung und das Bestimmen des Vorhandenseins einer Fehlerbedingung, wenn die Laufkatzenlaufrichtung nicht mit einer angeforderten Laufkatzenlaufrichtung übereinstimmt.

18. Verfahren nach einem der vorhergehenden Ansprüche, ferner umfassend den Schritt des Steuerns des Kransystems (10), um Korrekturmaßnahmen für den Fall zu ergreifen, dass das Vorhandensein einer Fehlerbedingung erfasst wird.

## Revendications

1. Procédé de détection d'une condition de défaillance dans un système de grue (10), le système de grue comprenant un palonnier (40) permettant de soulever une charge, le palonnier comprenant au moins deux points de charge (52), chaque point de charge étant agencé pour soutenir une partie respective de la charge, le procédé comprenant :
la surveillance des chargements respectifs appliqués à chacun des points de charge (52) ;
l'analyse des chargements pour déterminer si le système de grue fonctionne en dehors d'une ou de plusieurs plages de charge acceptable(s) ;
la surveillance d'une inclinaison du palonnier par rapport à un plan horizontal ;
la comparaison de l'inclinaison à un seuil d'inclinaison pour déterminer si le système de grue fonctionne en dehors du seuil d'inclinaison ; et
la détermination de l'existence d'une condition de défaillance si le système de grue fonctionne en dehors du seuil d'inclinaison ou à au moins l'une des plages de charge acceptables.

2. Procédé selon la revendication 1, dans lequel l'analyse des chargements comprend la détermination d'une charge globale totale appliquée à tous les points de charge (52).

3. Procédé selon la revendication 1, comprenant la surveillance d'une charge globale totale appliquée au palonnier (40) séparément de la surveillance des chargements à chaque point de charge (52).

4. Procédé selon la revendication 2 ou 3, comprenant le fait de déterminer si la charge globale indique que le système de grue (10) fonctionne en dehors d'une plage de charge acceptable définie par un seuil supérieur et un seuil inférieur, chacun se rapportant à la charge globale.

5. Procédé selon une quelconque revendication précédente, dans lequel l'analyse des chargements comprend la détermination d'une répartition de charge entre les points de charge (52).

6. Procédé selon la revendication 5, comprenant le fait de déterminer si la répartition de charge indique que le système de grue (10) fonctionne en dehors d'une plage de charge acceptable définie par un seuil supérieur et un seuil inférieur, chacun se rapportant à la répartition de charge.

7. Procédé selon une quelconque revendication précédente, comprenant la surveillance de l'inclinaison du palonnier (40) dans deux axes orthogonaux du plan horizontal.

8. Procédé selon une quelconque revendication précédente, comprenant le réglage dynamique de la ou de chaque plage de charge acceptable en réponse aux chargements surveillées.

9. Procédé selon une quelconque revendication précédente, comprenant le réglage dynamique du seuil d'inclinaison en réponse à l'inclinaison surveillée.

10. Procédé selon une quelconque revendication précédente, destiné à détecter une condition de défaillance dans un système de grue (10) comprenant un palonnier (40) comprenant au moins quatre points de charge (52).

11. Procédé selon une quelconque revendication précédente, comprenant la surveillance de la vitesse verticale du palonnier (40), l'analyse de la vitesse verticale pour déterminer si le système de grue (10) fonctionne en dehors d'une plage de vitesse et la détermination de l'existence d'une condition de défaillance si le système de grue fonctionne en dehors de la plage de vitesse.

12. Procédé selon la revendication 11, comprenant le réglage dynamique de la plage de vitesse en réponse à la vitesse verticale surveillée.

13. Procédé selon la revendication 11 ou 12, comprenant le réglage dynamique de la ou de chaque plage de charge acceptable en réponse à la vitesse verticale surveillée.

14. Procédé selon une quelconque revendication précédente, pour détecter une condition de défaillance dans un système de grue à portique (10) comprenant un chariot (12) monté de manière mobile sur un ensemble de poutres généralement horizontales (20), et incluant la suspension du palonnier (40) sur un système de levage (58) soutenu par le chariot.

15. Procédé selon la revendication 14, comprenant la surveillance d'une vitesse du chariot (12) le long des poutres (20), l'analyse de la vitesse de chariot pour déterminer si le système de grue (10) fonctionne en dehors d'une plage de vitesse de chariot et la détermination de l'existence d'une condition de défaillance si le système de grue fonctionne en dehors de la plage de vitesse de chariot.

16. Procédé selon la revendication 15, comprenant le réglage dynamique de la plage de vitesse de chariot en réponse à la vitesse de chariot surveillée.

17. Procédé selon l'une des revendications 14 à 16, comprenant la surveillance d'une direction de déplacement du chariot (12) le long des poutres (20) afin de déterminer une direction de chariot, et la détermination de l'existence d'une condition de défaillance si la direction de chariot n'est pas identique à une direction de chariot demandée.

18. Procédé selon une quelconque revendication précédente, comprenant en outre l'étape de commande du système de grue (10) de manière à prendre des mesures correctives dans le cas où l'existence d'une condition de défaillance est détectée.
